# EUROPEAN PATENT SPECIFICATION

(11) **EP 2 777 614 B1**
(45) Date of publication and mention of the grant of the patent: **09.08.2017**
(21) Application number: 14155371.9
(22) Date of filing: 17.02.2014
(51) Int. Cl.: A61F 2/18, G01N 21/17, H04R 23/00, G02B 26/02, G01L 1/24

(54) **Sensor assembly using micropillars**
Sensoranordnung mit Mikrosäulen
Ensemble de capteur utilisant des micropiliers

(30) Priority: 14.03.2013 US 201313803492
(43) Date of publication of application: 17.09.2014
(73) Proprietor: The Boeing Company, Chicago, IL 60606-1596 (US)
(72) Inventor: Wilkins, Donald F., O'Fallon, MO 63368 (US)
(74) Representative: Witte, Weller & Partner Patentanwälte mbB

(56) References cited:
- WO-A2-2012/059828
- YANG ZHANG ET AL: "MEMS optical acoustic sensors manufactured in laminates", ELECTRONIC COMPONENTS AND TECHNOLOGY CONFERENCE (ECTC), 2011 IEEE 61ST, IEEE, 31 May 2011 (2011-05-31), pages 230-235, XP031996543, DOI: 10.1109/ECTC.2011.5898518 ISBN: 978-1-61284-497-8
- Zhou Long: "Newly-Developed Nanostructured Microcantilever Arrays for Gas-phase and Liquid- phase Sensing", Graduate School, Doctoral Dissertations, 1 May 2010 (2010-05-01), pages 1-133, XP055188040, Retrieved from the Internet: URL:http://trace.tennessee.edu/cgi/viewcon tent.cgi?article=1764&context=utk_graddiss [retrieved on 2015-05-07]
- XU T ET AL: "Polymeric micro-cantilever array for auditory front-end processing", SENSORS AND ACTUATORS A, ELSEVIER SEQUOIA S.A., LAUSANNE, CH, vol. 114, no. 2-3, 1 September 2004 (2004-09-01), pages 176-182, XP004534473, ISSN: 0924-4247, DOI: 10.1016/J.SNA.2003.11.035
- FRITZ J ET AL: "TRANSLATING BIOMOLECULAR RECOGNITION INTO NANOMECHANICS", SCIENCE, AMERICAN ASSOCIATION FOR THE ADVANCEMENT OF SCIENCE, US, vol. 288, 14 April 2000 (2000-04-14), pages 316-319, XP000971747, ISSN: 0036-8075, DOI: 10.1126/SCIENCE.288.5464.316

## Description

### BACKGROUND

The field of the disclosure relates generally to sensor assemblies, and more particularly, to sensor assemblies that use micropillars for light modulation.

At least one known micropillar sensor uses gross motion to sense a force or influence. However, the force exerted on the associated micropillars used with at least some known sensors must be sufficiently large to induce movement of the micropillars that can be observed to enable a signal to be produced. Another known micropillar sensor includes a liquid crystal material surrounding the micropillars. A light source directs light between the micropillars through the liquid crystal material. When a force is exerted on the sensor, the liquid crystal material is compressed or expanded. The compression or expansion of the liquid crystal material changes the amount of light passing therethrough. The change of light is detected and used to produce a signal. However, depending on the use of such sensors, the liquid crystal material may be susceptible to becoming contaminated and such a sensor may be fragile. Once contaminated, such micropillar sensors may be insensitive to small external changes and/or not robust. As such, the use of such sensors may be limited.

Yang Zhan et al.: "MEMS optical acoustic sensors manufactured in laminates", ELECTRONIC COMPONENTS AND TECHNOLOGY CONFERENCE (ECTC), 2011 IEEE 61ST, IEEE, 31 May 2011, pp. 230-235 discloses MEMS optical acoustic sensors manufactured in laminates. Independent cantilever sensors of the same length are hold for different lengths thereof in a printed circuit board. Light is directed through the fixed end and detected at a free moving end.

Zhou Long: "Newly -Developed Nanostructured Microcantilever Arrays for Gas-phase and Liquid-phase Sensing", Graduate School, Doctoral Dissertations, 1 May 2010, pp. 1-133 discloses a differentially functionalized microcantilever array with responsive phases. Different legions are chemically functionalized onto the individual microcantile-vers in an array for metal ion sensing in liquid phase.

### BRIEF DESCRIPTION

In one aspect, a sensor assembly is provided that includes a light source, a modulation layer, and at least one detector. The modulation layer includes a plurality of micropillars each having a fixed end and a free end. The fixed ends are each adjacent to the light source. The at least one detector is adjacent to the free ends of the plurality of micropillars. The detector is configured to detect light emitted from the light source. The light modulation layer comprises a first set of micropillars and a second set of micropillars, said first set of micropillars is oriented substantially perpendicular to said second set of micropillars. Further, the sensor assembly includes at least one light detector adjacent said free end of each micropillar. Furthermore, the sensor assembly is configured to determine a magnitude and a direction of an external force applied to each of said plurality of micropillars.

A method may be provided of determining a force applied to a sensor assembly. The method includes emitting light from a light source to a modulation layer. The modulation layer includes a plurality of micropillars each having a fixed end and a free end. The method also includes receiving the emitted light at the fixed ends of the micropillars and emitting the light from the free ends of the micropillars. The method further includes determining a change in at least one parameter of the light energy emitted from the free ends of the plurality of micropillars.

### BRIEF DESCRIPTION OF THE DRAWINGS

Fig. 1 is a schematic illustration of an example of a sensor assembly.
Fig. 2 is a plan view of a micropillar in various degrees of activation.
Fig. 3 illustrates an embodiment of the sensor assembly shown in Fig. 1.
Fig. 4 illustrates another example of the sensor assembly shown in Fig. 1.
Fig. 5 illustrates another example of the sensor assembly shown in Fig. 1.
Fig. 6 is an overhead view of DNA analysis being performed using the sensor assembly shown in Fig. 5.

### DETAILED DESCRIPTION

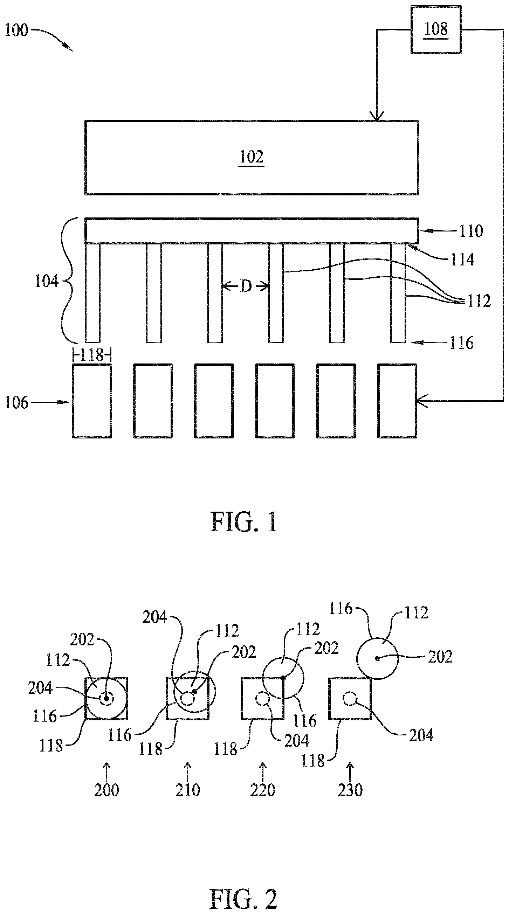

Referring now to the drawings, and in particular Fig. 1, a sensor assembly is shown generally at 100. In the example, sensor assembly 100 includes a light source 102, a light modulation layer 104, and at least one light detector 106. In some implementations, a controller 108 is in communication with light source 102 and/or light detector 106.

Light source 102 is configured to supply light energy. More specifically, light source 102 is a source that emits electromagnetic radiation in one or more wavelengths. For example, light source 102 may include one or more of a light emitting diode (LED), organic LED, incandescent bulb, fluorescent bulb, neon bulb, ambient light, the sun or any other electronic or chemical device capable of emitting electromagnetic radiation. In some implementations, light source 102 emits white light, a single color (wavelength of light) of light, a combination of two or more colors of light, ultraviolet light, infrared light or the like. Light source 102 may also emit any combinations of such light. Further, light source 102 may emit light directionally or omnidirectionally.

Light modulation layer 104 includes a base portion 110 and a plurality of micropillars 112. Each of micropillars 112 includes a fixed end 114 and a free end 116. Fixed ends 114 are coupled to, or formed integrally with, base portion 110. Micropillars 112 are opaque, such that light emitted from light source 102 enters fixed ends 114 at a first intensity and exits free ends 116 at a second intensity. In the example, micropillars 112 are positioned substantially parallel to each other and to a direction of the light energy supplied from light source 102. In one example, micropillars 112 are fabricated of a piezo-electric material, such as lead zirconate titanate (PZT). However, other suitable materials may be used that allow light modulation layer 104 to function as described herein. Light modulation layer 104 may include a plurality of micropillars 112 arranged in an array, such as a rectangular grid pattern having perpendicular rows and columns. In such embodiments, the plurality of micropillars 112 may each be spaced apart by a distance D. The spacing between adjacent micropillars 112 may be the same between all of micropillars 112, or may vary depending upon the desired application. In the example, micropillars 112 are activated by at least one of an electric force, a magnetic force, and/or an electromagnetic force. Micropillars 112 are configured to bend or deflect when activated, by an external force applied to modulation layer 104.

In the example illustrated in Fig. 1, sensor assembly 100 also includes at least one light detector 106. Light detector 106 is positioned adjacent free end 116 of micropillar 112 such that when micropillar 112 is not activated, light emitted by light source 102 travels through micropillar 112 and is detected by light detector 106 with no change or substantially no change in light intensity. Light detector 106 may be any type of optical sensor known in the art. In the exemplary implementation, light detector 106 is configured to detect and measure intensity and/or a change in intensity of the light energy supplied from light source 102 as it exits free ends 116 of micropillars 112 and is within a field-of-view (FOV) 118 of light detector 106. When micropillars 112 are activated and bent, at least a portion of the light travelling through micropillars 112 is directed away from light detectors 106. As some of the light is directed away, the intensity of the light measured by light detectors 106 changes over time. In some implementations, light detector 106 is configured to convert the measured light intensity and/or the change in light intensity into an electric signal representing an external force being applied to sensor assembly 100. The signal may be transmitted to controller 108. While described herein as detecting light intensities, light detector 106 is not limited to detecting this property. In other implementations, light detector 106 detects properties including, but not limited to, phase, polarization, wavelength, and spectral distribution. In the examples shown in Fig. 1, sensor assembly 100 includes a light detector 106 associated with each respective micropillar 112. However, in some implementations, a single micropillar 112 may be associated with two or more light detectors 106.

Referring now to Fig. 2, plan views of a micropillar 112 are illustrated in four different states of activation. In the first state 200, micropillar 112 is in a neutral, or deactivated, state. As such, in first state 200, sufficient activating energy has not been transmitted to the micropillar 112 by an external source to fully or partially activate micropillar 112. In this state, free end 116 of micropillar 112 is substantially aligned with FOV 118 of light detector 106. For example, an axial center 202 of free end 116 of micropillar 112 is aligned with center 204 of FOV 118. In neutral state 200, substantially all of the light entering fixed end 114 of micropillar 112 is transmitted through micropillar 112 and exits free end 116. The light is then transmitted through FOV 118, where light detector 106 measures intensity of the light.

In partially activated state 210, an external source has transmitted a sufficient amount of activation energy to micropillar 112 to cause partial activation of micropillar 112. As such, in partially activated state 210, free end 116 has bent, or flexed, such that axial center 202 of free end 116 is not aligned with center 204 of FOV 118. As such, only a portion of the light exiting free end 116 of micropillar 112 is transmitted through FOV 118 (i.e., light from the portion of the free end 116 within the sides of FOV 118). Light transmitted from free end 116 outside of FOV 118 is not transmitted through FOV 118, thus modulating (i.e., reducing) the intensity of the light emitted from FOV 118. Similarly, at partially activated state 220, the external source has transmitted a sufficient amount of activation energy to micropillar 112 to cause further activation of micropillar 112 as compared to state 210. Accordingly, a smaller amount of light is transmitted from the free end 116 through the semi-transparent area 120, further reducing the intensity of the light.

Fully activated state is represented generally at 230. In fully activated state 230, the external force has transmitted sufficient energy to bend free end 116 fully outside of (e.g., fully out of alignment with) FOV 118. As such, none of the light exiting free end 116 of micropillar 112 in the fully activated state is transmitted through FOV 118.

In some embodiments, light detector 106 is configured to transmit the light intensity measurement data to controller 108. Controller 108 determines a force applied to sensor assembly 100 based on the change in light intensity received at light detector 106. In determining the force, controller 108 uses known values for light intensity of light source 102 and the relationship between a change in light intensity and an amount of force applied to one of micropillars 112.

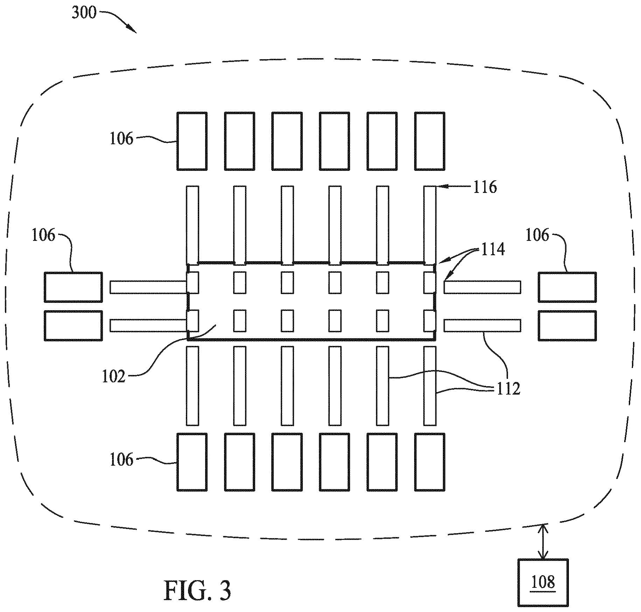

Fig. 3 illustrates an embodiment 300 of the sensor assembly 100 shown in Fig. 1. Components in sensor assembly 300, identical to components of sensor assembly 100, are identified in Fig. 3 using the same reference numerals as used in Fig. 1.

In the exemplary implementation, sensor assembly 300 includes a plurality of micropillars 112 arranged in a rectangular grid pattern having perpendicular rows and columns. Micropillars 112 are arranged about light source 102 in multiple directions. Sensor assembly 300 also includes at least one light detector 106 adjacent free ends 116 of each micropillar 112. As previously described, light detectors 106 measure the change in intensity of light energy emitted by light source 102 as micropillars 112 are activated by an external source. Light detectors 106 convert the measured changes in intensity to electrical signals and transmit the signals to controller 108. Positioning micropillars 112 and associated light detectors 106 in the array shown in Fig. 3 enables sensor assembly to determine both a magnitude and a direction of force from an external source. As disturbance from the external source moves through sensor assembly 300, there are delays in movement of the different micropillars 112 because of their positioning. In combination with the known position of each micropillar 112, such delays are used by controller 108 to determine the direction of the disturbance. As the amount of micropillars 112 and directions in which they are employed increases, the more precisely sensor assembly 300 can locate the direction of the external source relative to the sensing array.

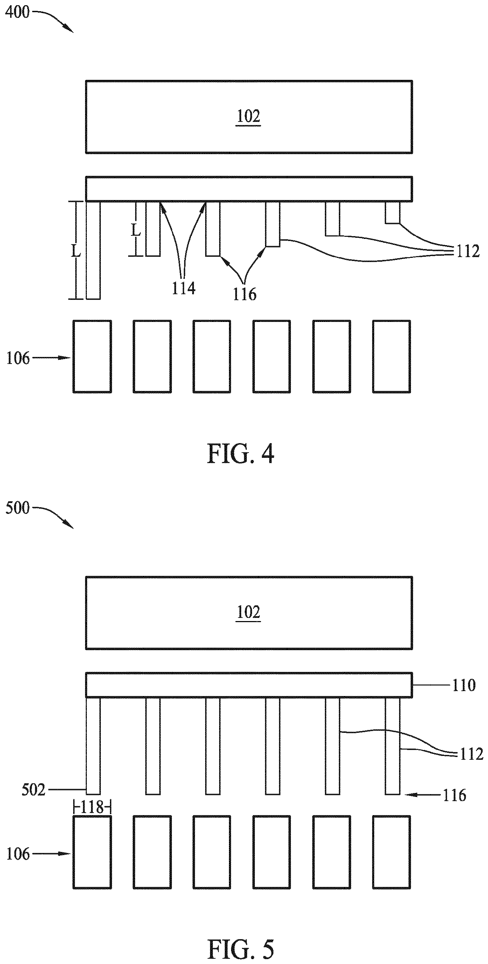

Fig. 4 illustrates another example 400 of the sensor assembly 100 shown in Fig. 1. Components in sensor assembly 400, identical to components of sensor assembly 100, are identified in Fig. 4 using the same reference numerals as used in Fig. 1. In the example, sensor assembly 400 includes a plurality of micropillars 112 having different lengths L. Micropillars 112 extend from fixed end 114 of base portion 110 of light modulation layer 104.

The example in Fig. 4, not representing the present invention, may be implemented as an artificial ear. Sensor assembly 400 mimics the hairs in the biological ear. The inner ear is hollow, embedded in the temporal bone, the densest bone of the body. The hollow channels of the inner ear are filled with liquid, and contain a sensory epithelium studded with hair cells. The microscopic "hairs" of these cells are structural protein filaments that project into the fluid. Hair cells are mechanoreceptors that release a chemical neurotransmitter when stimulated. Sound waves moving through the fluid push the filaments. If the filaments bend over far enough, the hair cells to fire. In this way sound waves are transformed into nerve impulse.

Because of the loud sounds in modern society, for example, music in civilian life or explosions in military service, after too much stimulation these hairs will die. Known designs for replacing the failed ear are low resolution with as few as 64 elements responding to an audio input. Micropillars 112 in sensor assembly 400 are cut to different lengths to each respond to a different frequency and bend as much as naturally occurring inner-ear hairs do. The change in light measured by light detectors 106 is translated into signals fed into the cranial nerve leading to the portion of the cerebral cortex dedicated to sound. Sensor assembly 400 is capable of employing as many or more micropillars 112 than there are hairs in the human ear, which is estimated at around 8,000. The more micropillars 112 that are included, the greater the frequency range detectable by sensor assembly 400 will become, resulting in better sound quality of the artificial ear.

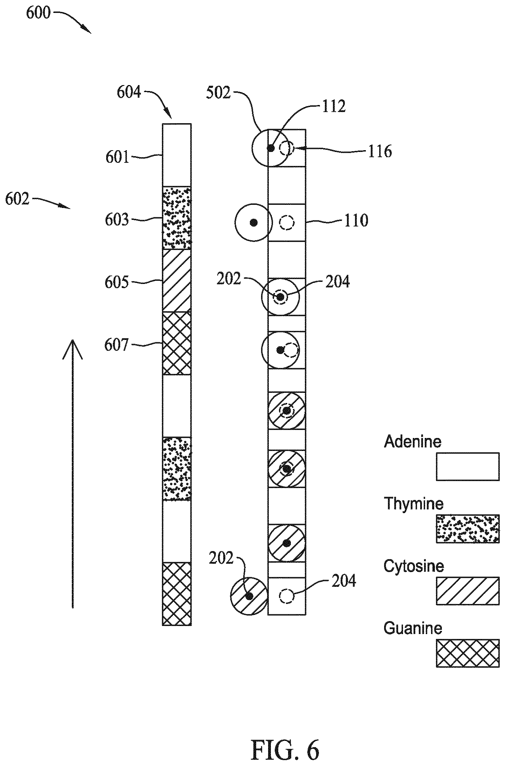

Fig. 5 illustrates an example 500, not falling under the scope of the present invention, of the sensor assembly 100 shown in Fig. 1. Components in sensor assembly 500, identical to components of sensor assembly 100, are identified in Fig. 5 using the same reference numerals as used in Fig. 1. Fig. 6 is an overhead view 600 of DNA analysis being performed using sensor assembly 500.

In the example, a coating 502 is applied to micropillars 112. Coating 502 is configured to react with external sample 602 applied to micropillars 112. Sample 602 includes a plurality of substances 601, 603, 605, and 607. Different coatings 502 may be applied to different micropillars 112 based on the specific application. In some implementations, the reaction may be induced by either an electric field and/or a magnetic field induced between substances 602 and coating 502. For example, in one implementation, substances 601, 603, 605, and 607 have either a positive or negative charge and coating 502 has an opposite charge from substances 601, 603, 605, and 607. As such, the fields of sample 602 and coating 502 facilitate attracting micropillars 112 to substances 601, 603, 605, and 607 such that micropillars 112 bend toward substances 601, 603, 605, and 607. The strength of the attraction between coating 502 and substances 601, 603, 605, and 607 determines how much micropillars 112 bend. At least a portion of the light from light source 102 travelling through micropillars 112 is directed away from light detectors 106. As some of the light is directed away, the intensity of the light measured by light detectors 106 changes over time. In the exemplary implementation, light detector 106 is configured to convert the measured light intensity and/or the change in light intensity into an electric signal representing an external force being applied to sensor assembly 100. The signal may be transmitted to controller 108.

Referring now to Fig. 6, a DNA strand 604 includes sample 602 and is analyzed using sensor assembly 500. In the exemplary implementation, DNA strand 604 includes four nucleobases: cytosine, guanine, adenine, and thymine. Some micropillars 112 are coated with adenine and other micropillars 112 are coated with cytosine.

In operation, DNA strand 604 is moved past micropillars 112 in a direction that is substantially perpendicular to the alignment of micropillars 112 on base 110. As coating 502 interacts with a specific nucleobase, micropillars 112 are activated and bend proportionately to the level of attraction/repulsion between coating 502 and substance 502. Light detectors 106 measure a change in intensity of light energy from light source 102 as the axial center 202 (shown in Fig. 2) of micropillar 112 moves relative to a center 204 of the frame of view 118 (shown in Fig. 2) of light detector 106.

As used herein, the term controller may refer to an electronic controller, which may include a computer processor or processing device (not shown). The processor is generally any piece of hardware that is capable of processing information such as, for example, data, computer-readable program code, instructions or the like (generally "computer programs," e.g., software, firmware, etc.), and/or other suitable electronic information. For example, the processor may be configured to execute computer programs or commands, which may be stored onboard the processor or otherwise stored in an associated memory (not shown). In yet another example, the processor may be embodied as or otherwise include one or more application-specific integrated circuits (ASICs), field-programmable gate arrays (FPGAs) or the like. Thus, although the processor may be capable of executing a computer program to perform one or more functions, the processor of various examples may be capable of performing one or more functions without the aid of a computer program. As used herein, electronic or computer memory is generally any piece of hardware that is capable of storing information such as data, computer programs and/or other suitable information either on a temporary basis or a permanent basis. In one example, the memory may be configured to store various information in one or more databases. The memory may include volatile and/or nonvolatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk read-only-memory (CD-ROM), compact disk read/write memory (CD-R/W), digital video disk memory (DVD), or the like. In various instances, the memory may be referred to as a computer-readable storage medium which, as a non-transitory device capable of storing information, may be distinguishable from computer-readable transmission media such as electronic transitory signals capable of carrying information from one location to another. Computer-readable media, as described herein, may generally refer to a computer-readable storage medium or computer-readable transmission medium.

This written description uses examples to disclose the implementations, including the best mode, and also to enable any person skilled in the art to practice the implementations, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A sensor assembly (300) comprising:
a light source (102);
a light modulation layer (104) comprising a plurality af micropillars (112) that each comprise a fixed end (114) and a free end (116), each of said fixed ends is adjacent to said light source;
at least one light detector (106) adjacent to said plurality of free ends, said at least one light detector configured to detect light emitted from said light source, wherein said light modulation layer (104) comprises a first set of micropillars (112) and a second set of micropillars (112), said first set of micropillars is oriented substantially perpendicular to said second set of micropillars; and
a controller (108);
wherein the sensor assembly (300) includes at least one light detector (106) adjacent said free end (116) of each micropillar (112); and
wherein said controller (108) is configured to determine a magnitude and a direction of an external force applied to each of said plurality of micropillars (112).

2. The sensor assembly (300) according to claim 1, wherein said plurality of micropillars (112) are oriented substantially parallel to a direction of light emitted from said light source (102).

3. The sensor assembly (300) according to claim 1 or 2, wherein said light source (102) is configured to direct light energy through each of said plurality of micropillars (112) and towards said at least one light detector (106).

4. The sensor assembly (300) according to any of claims 1 to 3, wherein said at least one light detector (106) is configured to detect a property of said light energy passing through said plurality of micropillars (112).

5. The sensor assembly (300) according to claim 4, wherein said at least one light detector (106) is configured to detect motions of said plurality of micropillars (112) based on a change in light intensity at said at least one light detector.

6. The sensor assembly (300) according to claim 5, wherein said at least one light detector (106) is configured to produce a signal representing an external force applied to said sensor assembly.

7. The sensor assembly (300) according to claim 5 or 6, wherein a force applied to said sensor assembly is determined based on the change in light intensity measured by said at least one light detector (106).

## Patentansprüche

1. Sensoranordnung (300), mit:
einer Lichtquelle (102);
einer Lichtmodulationsschicht (104) mit einer Mehrzahl von Mikrosäulen (112), die jeweils ein festes Ende (114) und ein freies Ende (116) aufweisen, wobei jedes feste Ende benachbart zu der Lichtquelle ist;
zumindest einem Lichtdetektor (106), der benachbart zu der Mehrzahl von freien Enden ist, wobei der mindestens eine Lichtdetektor dazu konfiguriert ist, von der Lichtquelle emittiertes Licht zu detektieren, wobei die Lichtmodulationsschicht (104) einen ersten Satz von Mikrosäulen (112) und einen zweiten Satz von Mikrosäulen (112) aufweist, wobei der erste Satz von Mikrosäulen im Wesentlichen senkrecht zu dem zweiten Satz von Mikrosäulen orientiert ist; und
einem Controller (108);
wobei die Sensoranordnung (300) mindestens einen Lichtdetektor (106) benachbart dem freien Ende (116) jeder Mikrosäule (112) aufweist;
wobei der Controller (108) dazu konfiguriert ist, eine Größe und eine Richtung einer auf jede der Mehrzahl von Mikrosäulen (112) beaufschlagten externen Kraft zu bestimmen.

2. Sensoranordnung (300) nach Anspruch 1, wobei die Mehrzahl von Mikrosäulen (112) im Wesentlichen parallel zu einer Richtung von von der Lichtquelle (102) emittiertem Licht orientiert ist.

3. Sensoranordnung (300) nach Anspruch 1 oder 2, wobei die Lichtquelle (102) dazu konfiguriert ist, Lichtenergie durch jede der Mehrzahl von Mikrosäulen (112) und in Richtung des mindestens einen Lichtdetektors (106) zu richten.

4. Sensoranordnung (300) nach einem der Ansprüche 1 bis 3, wobei der mindestens eine Lichtdetektor (106) dazu konfiguriert ist, eine Eigenschaft der Lichtenergie zu detektieren, die durch die Mehrzahl von Mikrosäulen (112) tritt.

5. Sensoranordnung (300) nach Anspruch 4, wobei der mindestens eine Lichtdetektor (106) dazu konfiguriert ist, Belegungen der Mehrzahl von Mikrosäulen (112) basierend auf einer Änderung der Lichtintensität an dem mindestens einen Lichtdetektor zu detektieren.

6. Sensoranordnung (300) nach Anspruch 5, wobei der mindestens eine Lichtdetektor (106) dazu konfiguriert ist, ein Signal zu erzeugen, das eine auf die Sensoranordnung beaufschlagte externe Kraft repräsentiert.

7. Sensoranordnung (300) nach Anspruch 5 oder 6, wobei eine auf die Sensoranordnung beaufschlagte Kraft basierend auf einer Änderung der Lichtintensität bestimmt wird, die von dem mindestens einen Lichtdetektor (106) gemessen ist.

## Revendications

1. Ensemble de capteur (300) comprenant :
une source de lumière (102) ;
une couche de modulation de lumière (104) comprenant une pluralité de micropiliers (112) qui comprennent chacun une extrémité fixe (114) et une extrémité libre (116), chacune desdites extrémités fixes est adjacente à ladite source de lumière ;
au moins un détecteur de lumière (106) adjacent à ladite pluralité d'extrémités libres, ledit au moins un détecteur de lumière étant configuré pour détecter la lumière émise par ladite source de lumière, où ladite couche de modulation de lumière (104) comprend un premier ensemble de micropiliers (112) et un second ensemble de micropiliers (112), ledit premier ensemble de micropiliers étant orienté sensiblement perpendiculairement audit second ensemble de micropiliers ; et
un contrôleur (108) ;
où l'ensemble de capteur (300) comprend au moins un détecteur de lumière (106) adjacent à ladite extrémité libre (116) de chaque micropilier (112) ; et
où ledit contrôleur (108) est configuré pour déterminer une grandeur et une direction d'une force externe appliquée à chacun de ladite pluralité de micropiliers (112).

2. Ensemble de capteur (300) selon la revendication 1, dans lequel ladite pluralité de micropiliers (112) est orientée sensiblement parallèlement à une direction de lumière émise par ladite source de lumière (102).

3. Ensemble de capteur (300) selon la revendication 1 ou la revendication 2, dans lequel ladite source de lumière (102) est configurée pour diriger l'énergie lumineuse à travers chacun de ladite pluralité de micropiliers (112) et vers ledit au moins un détecteur de lumière (106).

4. Ensemble de capteur (300) selon l'une quelconque des revendications 1 à 3, dans lequel ledit au moins un détecteur de lumière (106) est configuré pour détecter une propriété de ladite énergie lumineuse traversant ladite pluralité de micropiliers (112).

5. Ensemble de capteur (300) selon la revendication 4, dans lequel ledit au moins un détecteur de lumière (106) est configuré pour détecter des mouvements de ladite pluralité de micropiliers (112) sur la base d'un changement d'intensité lumineuse au niveau dudit au moins un détecteur de lumière.

6. Ensemble de capteur (300) selon la revendication 5, dans lequel ledit au moins un détecteur de lumière (106) est configuré pour produire un signal représentant une force externe appliquée audit ensemble de capteur.

7. Ensemble de capteur (300) selon la revendication 5 ou la revendication 6, dans lequel une force appliquée audit ensemble de capteur est déterminée sur la base du changement d'intensité lumineuse mesurée par ledit au moins un détecteur de lumière (106).
